(19) Europäisches Patentamt / European Patent Office / Office européen des brevets

(11) **EP 4 525 289 A1**

(12) **EUROPÄISCHE PATENTANMELDUNG**

(43) Veröffentlichungstag:
**19.03.2025 Patentblatt 2025/12**

(21) Anmeldenummer: **23197474.2**

(22) Anmeldetag: **14.09.2023**

(51) Internationale Patentklassifikation (IPC):
*H02M 3/335* (2006.01)   *H02M 3/00* (2006.01)
*H02M 3/158* (2006.01)   *H02M 1/00* (2006.01)
*H02M 1/34* (2007.01)

(52) Gemeinsame Patentklassifikation (CPC):
**H02M 3/33573; H02M 1/0058; H02M 1/0064;**
**H02M 1/34; H02M 1/346; H02M 3/01;**
**H02M 3/1582; H02M 3/1584; H02M 3/33584**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **FRONIUS INTERNATIONAL GmbH**
**4643 Pettenbach (AT)**

(72) Erfinder: **Achleitner, Günter**
**4600 Wels-Thalheim (AT)**

(74) Vertreter: **Patentanwälte Pinter & Weiss OG**
**Prinz-Eugen-Straße 70**
**1040 Wien (AT)**

(54) **RESONANZWANDLER MIT PARALLELEN EINGANGS-HALBBRÜCKEN UND VERFAHREN ZUR ANSTEUERUNG EINES RESONANZWANDLERS**

(57)     Um einen Resonanzwandler (100) anzugeben, der auch in Betriebspunkten abseits seiner Resonanzpunkte (f_R) einen verlustarmen Betrieb erlaubt, werden zwei zueinander parallel geschaltete Halbbrücken (HB1, HB2) jeweils über eine Resonanzdrossel (L_{r1}, L_{r2}) mit einem Resonanzknotenpunkt (KP) verbunden, und es wird zwischen zwei Anschlusspunkte der Halbbrücken (HB1, HB2) ein Entlastungskondensator (C2) geschaltet.

FIG. 3

EP 4 525 289 A1

**Beschreibung**

Die gegenständliche Erfindung betrifft einen elektrischen Resonanzwandler, welcher eine Eingangsstufe mit einem ersten Eingangspol und einem zweiten Eingangspol zum Anlegen einer elektrischen Eingangsspannung, eine Ausgangsstufe mit einem mit einem ersten Ausgangspol und einem zweiten Ausgangspol zum Anlegen oder Ausgeben einer elektrischen Ausgangsspannung, und einen, zumindest eine Resonanzfrequenz des Resonanzwandlers festlegenden Resonanzkreis zum elektrischen Koppeln der Eingangsstufe mit der Ausgangsstufe umfasst, wobei die Eingangsstufe eine zwischen den ersten und zweiten Eingangspol geschaltete erste Halbbrücke mit einem oberen Halbleiterschalter und einem unteren Halbleiterschalter aufweist, um eine erste Übertragungswechselspannung zu erzeugen, wobei der Resonanzkreis einen ersten Resonanzkreis-Eingang aufweist, der zwischen dem oberen und dem unteren Halbleiterschalter der ersten Halbbrücke mit der ersten Halbbrücke verbunden ist, um die erste Übertragungswechselspannung aufzunehmen und in eine an einem Resonanzkreis-Ausgang ausgegebene Resonanzkreis-Ausgangsspannung zu übertragen, und wobei die Ausgangsstufe einen Ausgangsstufen-Eingang aufweist, um die Resonanzkreis-Ausgangsspannung aufzunehmen und in die Ausgangsspannung zu übertragen. Daneben betrifft die Erfindung ein Verfahren zur Ansteuerung eines Resonanzwandlers.

Resonanzwandler nehmen eine an einem Eingang des Resonanzwandlers angelegte Eingangsspannung auf und überführen diese in eine an einem Ausgang des Resonanzwandlers ausgegebene Ausgangsspannung. Sowohl bei der Eingangsspannung als auch bei der Ausgangsspannung kann es sich dabei um eine Gleich- oder Wechselspannung handeln. Bekanntermaßen werden bei einem Resonanzwandler im Zuge der Übertragung einer Eingangsspannung in eine Ausgangsspannung eine Mehrzahl von Halbleiterschaltern mit einer vorgegebenen Schaltfrequenz geschaltet, d.h. geöffnet und wieder geschlossen, um die angelegte Eingangsspannung zunächst in eine interne Wechselspannung zu wandeln. Aus der internen Wechselspannung wird in weiterer Folge die gewünschte Ausgangsspannung erzeugt.

In bekannter Weise sorgt bei Resonanzwandlern ein üblicherweise zwischen Ein- und Ausgang des Resonanzwandlers vorgesehener Resonanzkreis mit zumindest einer Resonanzfrequenz, die auf eine im Betrieb des Resonanzwandlers zu erwartende Schaltfrequenz zum Schalten der Halbleiterschalter abgestimmt ist, dafür, dass die im Resonanzwandler vorgesehenen Halbleiterschalter (zumindest näherungsweise) entweder strom- oder spannungsfrei geschaltet werden können. Man unterscheidet zwischen ZVS- und ZCS-Resonanzwandlern (ZVS: Zero Voltage Switching, ZCS: Zero Current Switching). Ein wichtiger Grund für die Ermöglichung eines (zumindest näherungsweisen) strom- oder spannungsfreien Schaltens ist eine meist zumindest näherungsweise 90 Grad betragende Phasenverschiebung zwischen internen Wechselspannungen und internen Strömen, die sich bei einem Betrieb in einem Resonanzpunkt typischerweise einstellt. Auf diese Weise werden im Vergleich zu anderen Wandler-Topologien Schaltverluste vermindert, wodurch in vielen Fällen ein besonders energiesparender Betrieb möglich wird. Da die Funktionsweise von Resonanzwandlern hinlänglich bekannt ist, z.B. aus den Schriften WO 2018/086806 A1, DE 10 2004 035 248 A1 oder EP 2 795 781 B1, werden die grundlegenden Prinzipien eines Resonanzwandlers an dieser Stelle nicht näher ausgeführt.

Aufgrund der durch Resonanzwandler gebotenen Möglichkeit, einerseits Schalterverluste zu reduzieren und damit Energie zu sparen, andererseits aber auch Bauteile, wie insbesondere Halbleiterschalter, zu schonen, waren und sind Resonanzwandler Gegenstand vielfältiger aktueller Forschungstätigkeiten. Das spiegelt sich auch im bekannten Stand der Technik.

So lehrt US 8,363,427 B2 einen bidirektionalen Resonanzwandler, bei dem mittels einer in einer Eingangsstufe des Resonanzwandlers vorgesehenen Vollbrücke angestrebt wird, einen möglichst verlustfreien Schaltbetrieb über einen großen Lastbereich bereitzustellen.

Auch US 2021/0099096 A1 offenbart einen bidirektionalen Resonanzwandler, bei dem ebenfalls eine Vollbrücke in einer Eingangsstufe vorgesehen ist, wobei mittels eines geeigneten Ansteuerverfahrens eine hohe Verstärkung in einem Umkehrmodus ("reverse mode") realisiert wird.

Ein Problem, auf das im zitierten Stand der Technik allerdings nur unzureichend eingegangen wird, sind Änderungen im Betrieb eines Resonanzwandlers, die zu Abweichungen zwischen Schaltfrequenzen zum Schalten der Halbleiterschalter im Resonanzwandler und Resonanzfrequenzen von Resonanzkreisen des Resonanzwandlers führen. Derartige Änderungen sind im Realbetrieb jedoch oftmals unvermeidlich. Wird ein Resonanzpunkt im Betrieb verlassen, beispielsweise weil sich eine durch den Resonanzwandler versorgte Last, eine vorgegebene Eingangsspannung oder eine geforderte Ausgangspannung ändern, kommt es zu mitunter gravierenden Verschlechterungen des Wirkungsgrades. Der bekannte Stand der Technik bietet hierzu keine Ansätze, die Wirkungsgradverschlechterungen aufgrund von Verstimmungen zwischen eingesetzten Schaltfrequenzen und gegebenen Resonanzfrequenzen in zufriedenstellender Weise entgegenwirken würden.

Es ist daher eine Aufgabe der gegenständlichen Erfindung, einen bezogen auf seinen Wirkungsgrad robusteren Resonanzwandler zur Verfügung zu stellen.

Diese Aufgabe wird durch die Merkmale der unabhängigen Ansprüche gelöst. Konkret sehen die unabhängigen Ansprüche einen elektrischen Resonanzwandler vor, welcher eine Eingangsstufe mit einem ersten Eingangspol und einem zweiten Eingangspol zum Anlegen einer elektrischen Eingangsspannung umfasst, sowie eine Ausgangsstufe mit einem ersten Ausgangspol und einem zweiten Ausgangspol zum Ausgeben einer elektrischen Ausgangsspannung, und einen, zumindest eine Resonanzfrequenz des Resonanzwandlers festlegenden Resonanzkreis zum elektrischen Koppeln der Eingangsstufe mit der Ausgangsstufe, wobei die Eingangsstufe eine zwischen den ersten und den zweiten Eingangspol geschaltete erste Halbbrücke mit einem oberen Halbleiterschalter und einem unteren Halbleiterschalter aufweist, um eine erste Übertragungswechselspannung zu erzeugen, wobei der Resonanzkreis einen ersten Resonanzkreis-Eingang aufweist, der zwischen dem oberen und dem unteren Halbleiterschalter der ersten Halbbrücke mit der ersten Halbbrücke verbunden ist, um die erste Übertragungswechselspannung aufzunehmen und in eine an einem Resonanzkreis-Ausgang des Resonanzkreises ausgegebene Resonanzkreis-Ausgangsspannung zu übertragen, und wobei die Ausgangsstufe einen Ausgangsstufen-Eingang aufweist, um die Resonanzkreis-Ausgangsspannung aufzunehmen und in die Ausgangsspannung zu übertragen.

Erfindungsgemäß ist für einen derartigen Resonanzwandler in der Eingangsstufe eine zur ersten Halbbrücke parallel geschaltete, zweite Halbbrücke mit einem oberen Halbleiterschalter und einem unteren Halbleiterschalter vorgesehen, um eine zweite Übertragungswechselspannung zu erzeugen. Ebenso erfindungsgemäß weist der Resonanzkreis einen zweiten Resonanzkreis-Eingang auf, der zwischen dem oberen und dem unteren Halbleiterschalter der zweiten Halbbrücke mit der zweiten Halbbrücke verbunden ist, um die zweite Übertragungswechselspannung aufzunehmen, ist zwischen den ersten Resonanzkreis-Eingang und den zweiten Resonanzkreis-Eingang ein Entlastungskondensator geschaltet, und sind der erste Resonanzkreis-Eingang und der zweite Resonanzkreis-Eingang jeweils über eine Resonanzdrossel mit einem Resonanzknotenpunkt im Resonanzkreis verbunden, um die erste Übertragungswechselspannung und die zweite Übertragungswechselspannung über den Resonanzknotenpunkt in die am Resonanzkreis-Ausgang ausgegebene Resonanzkreis-Ausgangsspannung zu übertragen.

Die erfindungsgemäße Topologie erlaubt auf einfache wie effektive Weise auch abseits von Resonanzpunkten einen nahezu verlustfreien Betrieb. In einem entscheidenden Maß wird dies durch die Resonanzdrosseln möglich, die bei einem Einschalten der in den Halbbrücken vorgesehenen Halbleiterschaltern verhindern, dass die durch diese Halbleiterschalter fließenden Ströme sprungartig ansteigen, sowie durch den Entlastungskondensator, über den ein nach dem Schließen der Halbleiterschalter von den Resonanzdrosseln aufgrund ihrer Induktivität weitergetriebener Strom fließen kann, sodass keine Ströme über sich schließende Halbleiterschalter fließen müssen.

Vorteilhafte topologische Ausgestaltungen des erfindungsgemäßen Resonanzwandlers sind in den abhängigen Ansprüchen 2 bis 12 angegeben.

Weiters wird die gegenständliche Aufgabe durch ein Verfahren gelöst, bei dem eine zweite Übertragungswechselspannung erzeugt wird, indem der obere Halbleiterschalter und der untere Halbleiterschalter der zur ersten Halbbrücke parallel geschalteten, zweiten Halbbrücke angesteuert werden, der Resonanzkreis über den zweiten Resonanzkreis-Eingang, der zwischen dem oberen und dem unteren Halbleiterschalter der zweiten Halbbrücke mit der zweiten Halbbrücke verbunden ist, die zweite Übertragungswechselspannung aufnimmt, zwischen den ersten Resonanzkreis-Eingang und den zweiten Resonanzkreis-Eingang ein Entlastungskondensator geschaltet wird, und der erste Resonanzkreis-Eingang und der zweite Resonanzkreis-Eingang jeweils über eine Resonanzdrossel mit einem Resonanzknotenpunkt im Resonanzkreis verbunden wird, um die erste Übertragungswechselspannung und die zweite Übertragungswechselspannung über den Resonanzknotenpunkt in die am Resonanzkreis-Ausgang ausgegebene Resonanzkreis-Ausgangsspannung zu übertragen.

In einer besonders vorteilhaften Weise können hierbei in einem ersten Ansteuerschritt die oberen Halbleiterschalter beider Halbbrücken gleichzeitig geschlossen werden, danach in einem zweiten Ansteuerschritt zuerst der obere Halbleiterschalter der ersten Halbbrücke geöffnet wird, danach nach einer vorgegebenen Wartedauer in einem dritten Ansteuerschritt der obere Halbleiterschalter der zweiten Halbbrücke geöffnet wird, danach in einem vierten Ansteuerschritt die unteren Halbleiterschalter beider Halbbrücken gleichzeitig geschlossen werden, danach in einem fünften Ansteuerschritt zuerst der untere Halbleiterschalter der ersten Halbbrücke geöffnet wird, danach nach einer vorgegebenen Wartedauer in einem sechsten Ansteuerschritt der untere Halbleiterschalter der zweiten Halbbrücke geöffnet wird, danach in einem siebten Ansteuerschritt die oberen Halbleiterschalter beider Halbbrücken gleichzeitig geschlossen werden, danach in einem achten Ansteuerschritt zuerst der obere Halbleiterschalter der zweiten Halbbrücke geöffnet wird, danach nach einer vorgegebenen Wartedauer in einem neunten Ansteuerschritt der obere Halbleiterschalter der ersten Halbbrücke geöffnet wird, danach in einem zehnten Ansteuerschritt die unteren Halbleiterschalter beider Halbbrücken gleichzeitig geschlossen werden, danach in einem elften Ansteuerschritt zuerst der untere Halbleiterschalter der zweiten Halbbrücke geöffnet wird und danach nach einer vorgegebenen Wartedauer einem zwölften Ansteuerschritt der untere Halbleiterschalter der ersten Halbbrücke geöffnet wird.

Diese besondere Form der Ansteuerung erlaubt es, die Öffnungs- und Schließzeiten der in den Halbbrücken des Resonanzwandlers vorgesehenen Halbleiterschalter präzise auf die vorgesehenen Bauteile abzustimmen, und dabei insbesondere die Zeitkonstanten der für den erfindungsgemäßen Resonanzwandler entscheidenden Bauteile Resonanzdrosseln und Entlastungskondensator zu berücksichtigen. Insbesondere wird es durch die beschriebene Ansteuerungsabfolge möglich, den Entlastungskondensator in jedem Ansteuerzyklus bis auf die vorgegebene Eingangsspannung zu laden, was in für die Praxis relevanten Fällen meist eine nahezu vollständige Bereitstellung der von den Resonanzdrosseln weitergetriebenen Ströme aus der im Entlastungskondensator gespeicherten Ladung erlaubt. Damit fließt ein nur noch verschwindender Strom über sich öffnende Halbleiterschalter, was Schaltverluste auch abseits von Resonanzpunkten signifikant reduziert.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1 einen Resonanzwandler nach Stand der Technik,

Fig.2 einen erfindungsgemäßen Resonanzwandler,

Fig.3 eine erste mögliche Ausgestaltung eines erfindungsgemäßen Resonanzwandlers,

Fig.4 eine zweite mögliche Ausgestaltung eines erfindungsgemäßen Resonanzwandlers,

Fig. 5a-e eine Abfolge von Ansteuerungsschritten zur Ansteuerung eines erfindungsgemäßen Resonanzwandlers.

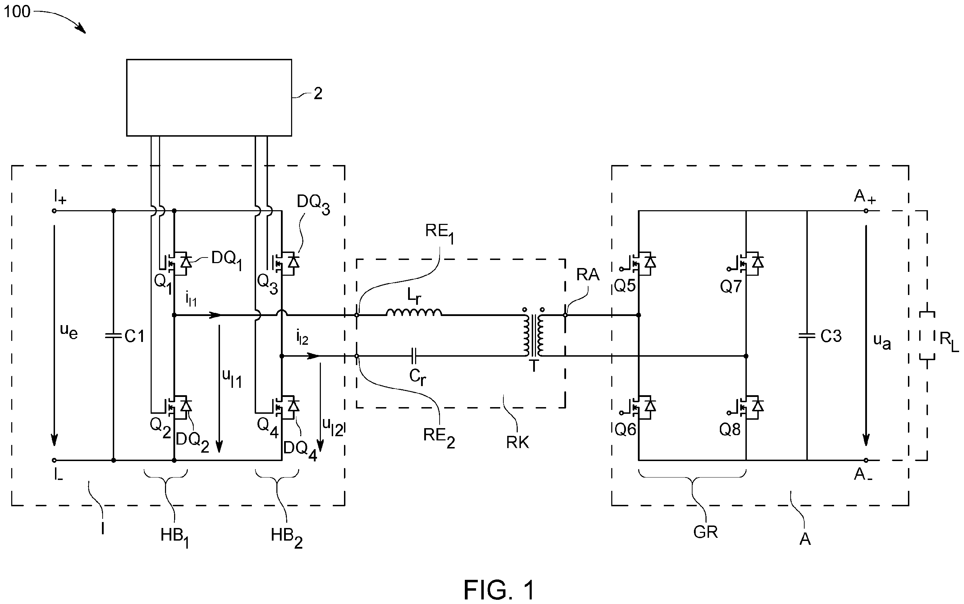

Fig.1 zeigt einen Resonanzwandler (in diesem Fall ein LLC-Wandler) 10 nach Stand der Technik, wie er in vergleichbarer Form z.B. aus US 9515562 B2 bekannt ist.

Der in Fig.1 dargestellte Resonanzwandler 10 weist eine Eingangsstufe I mit einem ersten Eingangspol $I_+$ und einem zweiten Eingangspol $I_-$ zum Anlegen einer elektrischen Eingangsspannung $u_e$ auf, sowie eine Ausgangsstufe A mit einem ersten Ausgangspol $A_+$ und einem zweiten Ausgangspol $A_-$ zum Ausgeben einer elektrischen Ausgangsspannung $u_a$. In einer aus der Leistungselektronik hinlänglich bekannten Weise bilden der erste Eingangspol I+ und der zweite Eingangspol $I_-$ ein Eingangspolpaar, zwischen dem die Eingangsspannung $u_e$ anlegbar ist, und der erste Ausgangspol A+ und der zweite Ausgangspol $A_-$ bilden ein Ausgangspolpaar $A_., A_-$, zwischen dem die Ausgangsspannung $u_a$ ausgebbar ist. Typischerweise handelt es sich bei der Eingangsspannung $u_e$ um eine Eingangs-Gleichspannung, und bei der Ausgangsspannung $u_a$ um eine Ausgangs-Gleichspannung.

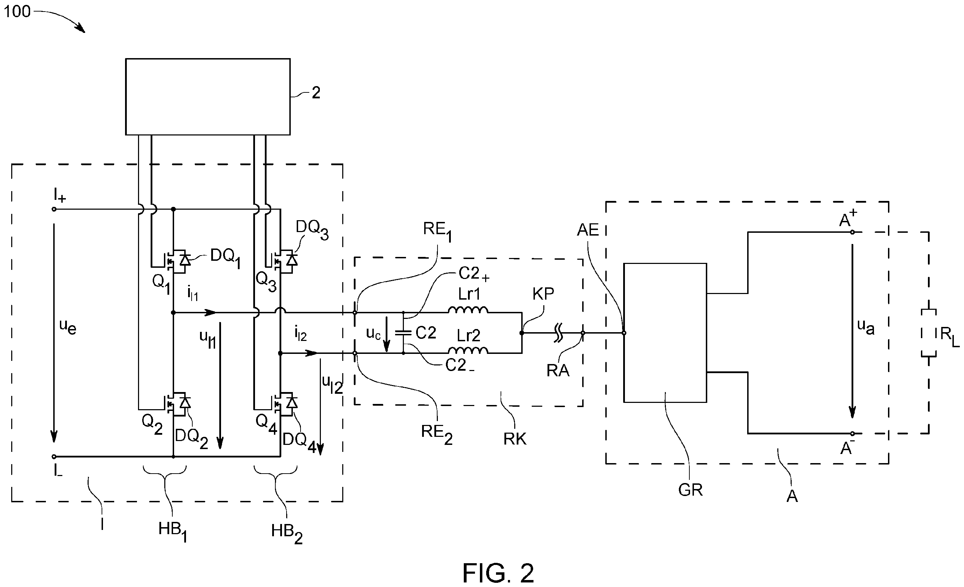

Als für den Betrieb des Resonanzwandlers 10 wesentliche Bestandteile sind in der Eingangsstufe I zwischen dem ersten und zweiten Eingangspol $I_+, I_-$ zwei Halbbrücken HB1, HB2 vorgesehen, die je einen oberen Halbleiterschalter Q1, Q3 und je einen unteren Halbleiterschalter Q2, Q4 aufweisen. Bei den Halbleiterschaltern Q1, Q2, Q3, Q4 kann es sich um Bipolartransistoren, IGBTs ("Insulated-Gate-Bipolar-Transistoren"), Feldeffekttransistoren (MOSFETs, JFETs, IGFETs) oder andere geeignete Schalter handeln. In bekannter Weise sind in Fig.1, aber auch in den nachfolgenden Figuren 2, 3 und 4, neben den Halbleiterschaltern Q1, Q2, Q3, Q4 selbst jeweils Freilaufdioden (auch Schutzdioden, oder engl. "Body-Diodes") DQ1, DQ2, DQ3, DQ4 gezeigt, die die Halbleiterschalter Q1, Q2, Q3, Q4 in bekannter Weise vor Überspannungen zu schützen. Werden als Halbleiterschalter Q1, Q2, Q3, Q4 beispielsweise MOSFETs verwendet, ergeben sich die Freilaufdioden DQ1, DQ2, DQ3, DQ4 implizit als integraler Bestandteil des Halbleiterschalters. Freilaufdioden DQ1, DQ2, DQ3, DQ4 können aber auch als separate Bauteile gesondert vorgesehen werden. Es sei angemerkt, dass Freilaufdioden DQ1, DQ2, DQ3, DQ4 für die gegenständliche Erfindung keine zwingenden Bestandteile darstellen, und ein Aufbau eines erfindungsgemäßen Resonanzwandlers 100 grundsätzlich auch ohne Freilaufdioden DQ1, DQ2, DQ3, DQ4 denkbar ist. Die Freilaufdioden DQ1, DQ2, DQ3, DQ4 können aber zur Umsetzung besonders vorteilhafter Ausführungen der Erfindung herangezogen werden, worauf an späterer Stelle im Detail eingegangen wird.

In ebenso bekannter Weise erlaubt es eine Halbbrücke HB1, eine an sie angelegte elektrische Spannung durch das Schalten von in der Halbbrücke HB1 vorgesehenen Halbleiterschalter Q1, Q2 zu "zerhacken", und an einem üblicherweise zwischen den Halbleiterschaltern Q1, Q2 vorgesehenen Ausgangs- bzw. Anschlusspunkt als gepulste (Rechteck-)Spannung auszugeben. Im gegenständlichen Resonanzwandler 10 wirken die Halbbrücken HB1, HB2 in ebendieser Weise, und erzeugen aus der angelegten Eingangsspannung $u_e$ gepulste, nachfolgend als Übertragungswechselspannungen $U_{l1}$, $U_{l2}$ bezeichnete, elektrische Spannungen, die zwischen den jeweiligen Halbleiterschaltern Q1, Q2 bzw. Q3, Q4 anliegen und die die Ströme $i_{l1}$ bzw. $i_{l2}$ treiben.

Zur Umsetzung der Ansteuerung der Halbleiterschalter Q1, Q2, Q3, Q4 ist in Fig.1 eine Steuereinheit 2 vorgesehen. Die Steuereinheit 2 setzt dabei ein hinlänglich bekanntes Modulationsverfahren wie PWM, PFM usw. um, wobei auf aus der Leistungselektronik hinlänglich bekannte Weise elektrische Ansteuerpulse ermittelt und den Schaltern Q1, Q2, Q3, Q4 zur Ansteuerung zugeführt werden. Für die gegenständlichen Ausführungen ist von Bedeutung, dass die genannten Ansteuerpulse in Ansteuerperioden Ts, die mit einer Ansteuerfrequenz fs=1/Ts wiederkehren, ausgegeben werden. Die zeitliche Länge der Ansteuerpulse wird hierbei variiert, um in bekannter Weise ein je nach Anwendungsfall gefordertes Tastverhältnis ("duty cycle") zu realisieren, das die Relation zwischen der zeitlichen Länge der Ansteuerpulse und der Dauer der Ansteuerperioden Ts beschreibt, und letztlich in ebenso bekannter Weise die erzeugte Ausgangsspannung $u_a$ festlegt.

Eine Steuereinheit 2 ist typischerweise Bestandteil des Resonanzwandlers 10, kann aber auch separat von einem Resonanzwandler 10 ausgeführt sein, und lediglich mit den Schaltern Q1, Q2, Q3, Q4 verkabelt sein, um diese anzusteuern. Mögliche Realisierungen einer Steuereinheit 2 sind unter anderem durch mikroprozessorbasierte Hardware gegeben, wie beispielsweise Mikrocontroller und integrierte Schaltungen (ASIC, FPGA).

Soll die Ausgangsspannung $u_a$ in Form einer Ausgangs-Gleichspannung ausgegeben werden, ist in der Ausgangsstufe A ein Gleichrichter GR vorzusehen, der die genannten Übertragungswechselspannungen $U_{l1}$, $U_{l2}$ in Gleichgrößen wandelt. Der Gleichrichter kann als Einweggleichrichter, Brückengleichrichter, Mittelpunktgleichrichter etc. umgesetzt sein, oder wie im in Fig.1 gezeigten Fall als Vollbrückengleichrichter. Als Stromventile können im Gleichrichter GR gleichermaßen Dioden oder Halbleiterschalter, wie MOSFETs, verwendet werden, wobei zur Gewährleistung eines bidirektionalen Betriebs auf Halbleiterschalter zurückzugreifen ist.

Zwischen der Eingangsstufe I und der Ausgangsstufe A ist im in Fig.1 gezeigten Resonanzwandler 10 ein Resonanzkreis RK vorgesehen, der einerseits aufgrund der im Resonanzkreis RK verbauten Bauteile und der Topologie des Resonanzkreises RK eine Resonanzfrequenz $f_R$ des Resonanzwandlers 100 festlegt, andererseits aber insbesondere dazu dient, die Eingangsstufe I mit der Ausgangsstufe A elektrisch zu koppeln. Als "elektrische Kopplung" ist dabei eine elektrische oder magnetische oder elektromagnetische Verbindung zu verstehen, die eine Leistungsübertragung ermöglicht, und demnach z.B. konduktiv, z.B. durch eine durchgängige, elektrisch leitende Verbindung, oder z.B. auch induktiv, z.B. durch einen Transformator, oder anderweitig ausgeführt sein kann.

Zur konkreten Umsetzung der elektrischen Kopplung der Eingangsstufe I mit der Ausgangsstufe A über den Resonanzkreis RK weist der Resonanzkreis RK einen ersten und einen zweiten Resonanzkreis-Eingang RE1, RE2 auf, die jeweils zwischen dem oberen und dem unteren Halbleiterschalter Q1, Q2 bzw. Q3, Q4 der entsprechenden Halbbrücke HB1, HB2 mit der jeweiligen Halbbrücke HB1, HB2 verbunden sind. Auf diese Weise ist es dem Resonanzkreis RK möglich, die genannten Übertragungswechselspannungen $U_{l1}$, $U_{l2}$ aufzunehmen und in eine an einem Resonanzkreis-Ausgang RA des Resonanzkreises RK ausgegebene Resonanzkreis-Ausgangsspannung $U_{RA}$ zu übertragen. Diese Resonanzkreis-Ausgangsspannung $U_{RA}$ wird in weiterer Folge über einen Ausgangsstufen-Eingang AE in die Ausgangsstufe A überführt, und von dort in die Ausgangsspannung $u_a$ gewandelt.

Im in Fig.1 gezeigten Resonanzkreis RK sind ein Resonanz-Kondensator $C_r$, eine Resonanzdrossel $L_r$ sowie einen Transformator T vorgesehen, um die zumindest eine vom Resonanzkreis RK festgelegte Resonanzfrequenz $f_R$ festzulegen. Für einen Resonanzwandler 10 gemäß Fig.1 kann die erste und für den Betrieb bedeutendste Resonanzfrequenz $f_R$ meist in guter Näherung

$$f_r = \frac{1}{2\pi\sqrt{L_r \cdot C_R}}$$

mit abgeschätzt werden. Auch die Streuinduktivität des Transformators wird oftmals als Teil des Resonanzkreises RK gesehen und berücksichtigt.

In bekannter Weise ist für einen Resonanzwandler 100 angestrebt, die Schalter Q1, Q2, Q3 und Q4 mit einer Schaltfrequenz fs zu schalten, die einer Resonanzfrequenz des Resonanzwandlers 100 entspricht, im gegenständlichen Fall der Resonanzfrequenz $f_R$, um den Resonanzkreis RK im Resonanzpunkt zu betreiben. Wie eingangs erläutert, wird auf diese Weise eine näherungsweise 90 Grad betragende Phasenverschiebung zwischen den von den Halbbrücken HB1, HB2 erzeugten Spannungen $u_{l1}$, $u_{l2}$ und den durch die Halbleiterschalter Q1, Q2, Q3, Q4 fließenden Strömen $i_{l1}$, $i_{l2}$ erreicht, bzw. eine große Spannungsverstärkung realisiert, die bei einer vorgegebenen zu übertragenden elektrischen Leistung zu geringeren Strömen führt. Insgesamt wird so ein verlustarmes Schalten der Halbleiterschalter Q1, Q2, Q3, Q4 und in direkter Konsequenz ein verlustarmer Betrieb des gesamten Resonanzwandlers 10 möglich.

Endzweck eines Resonanzwandlers 10 ist die Versorgung einer elektrischen Last $R_L$ mit der erzeugten Ausgangsspannung $u_a$, die sich, wie erwähnt, aus einem Produkt der Eingangsspannung $u_e$ mit einem für die Schaltfrequenz fs eingestellten Tastverhältnis zum Schalten der Halbleiterschalter Q1, Q2 Q3, Q4 ergibt. Eine versorgte Last $R_L$ ist nicht Bestandteil der gegenständlich betrachteten Resonanzwandler 10, und in den gegenständlichen Figuren demnach lediglich strichliert dargestellt. Bei einer elektrischen Last $R_L$ kann es sich in bekannter Weise um einen allgemeinen elektrischen DC-Verbraucher handeln, wie um eine Batterie, einen zu ladenden Akku oder um ein Versorgungsnetzteil. Weitere Details zur Umsetzung, zu alternativen Ausführungen und zum Betrieb von Resonanzwandlern können den Schriften US 8,363,427 B2, US 11,411,502 B2, US 2015/0263634 A1 oder US 2021/0099096 A1 entnommen werden.

Wie eingangs beschrieben, kann es im Realbetrieb eines Resonanzwandlers 100 zu Abweichungen der Schaltfrequenz fs zum Schalten der Halbleiterschalter von den Resonanzfrequenzen $f_R$ des im Resonanzwandler vorgesehenen Resonanzkreises RK kommen. Dafür existieren vielfältige Gründe, wobei vor allem Änderungen einer versorgten Last und Verschleiß und/oder Drift von Bauteilen in der Praxis häufig auftretende Ursachen sind. Wird der Resonanzpunkt im Betrieb verlassen, beispielsweise weil sich eine durch den Resonanzwandler versorgte Last, eine vorgegebene Eingangsspannung oder eine geforderte Ausgangspannung ändert, kommt es zu mitunter gravierenden Verschlechterungen des gegebenen Wirkungsgrades, was meist auf ein nicht mehr strom- und/oder spannungsfreies Schalten der Halbleiterschalter Q1, Q2, Q3, Q4 zurückzuführen ist.

Wie diesen Problemen und insbesondere aus diesen Problemen resultierenden Wirkungsgradverschlechterungen erfindungsgemäß entgegengewirkt wird, wird nachfolgend anhand des in Fig.2 gezeigten, erfindungsgemäßen Resonanzwandlers 100 diskutiert. Die zu Fig.1 getroffenen Ausführungen, insbesondere hinsichtlich Ein- und Ausgangsspannung, Betrieb eines Resonanzwandlers in einem Resonanzpunkt, Realisierung der Ausgangsstufe A, elektrische Kopplung der Eingangsstufe I und Ausgangsstufe A, Steuereinheit 2 usw., gelten dabei unverändert auch für die nachfolgend mit Bezugnahme auf die Fig.2 bis Fig.4 beschriebenen Resonanzwandler 100.

Zum Zweck einer Verbesserung des Wirkungsgrades abseits von Resonanzpunkten sind zunächst, verglichen mit dem Resonanzwandler 10 aus Fig.1, die auch im erfindungsgemäßen Resonanzwandler 100 vorgesehenen Halbbrücken HB1, HB2 anders verschaltet. Zwar nehmen die im Resonanzkreis RK vorgesehenen Resonanzkreis-Eingänge RE1, RE2 unverändert die zwischen den jeweiligen oberen und unteren Halbleiterschaltern Q1, Q2 bzw. Q3, Q4 abfallenden Übertragungswechselspannungen $U_{I1}$, $U_{I2}$ auf. Erfindungsgemäß sind der erste Resonanzkreis-Eingang RE1 und der zweite Resonanzkreis-Eingang RE2 allerdings jeweils über eine Resonanzdrossel $L_{r1}$, $L_{r2}$ mit einem Resonanzknotenpunkt KP im Resonanzkreis RK verbunden. Der Resonanzknotenpunkt KP ist wiederum elektrisch mit dem Ausgangsstufen-Eingang AE verbunden, sodass die erste Übertragungswechselspannung $U_{I1}$ und die zweite Übertragungswechselspannung $U_{I2}$ je über den Resonanzknotenpunkt KP in die am Resonanzkreis-Ausgang RA ausgegebene Resonanzkreis-Ausgangsspannung $U_{RA}$ übertragen werden.

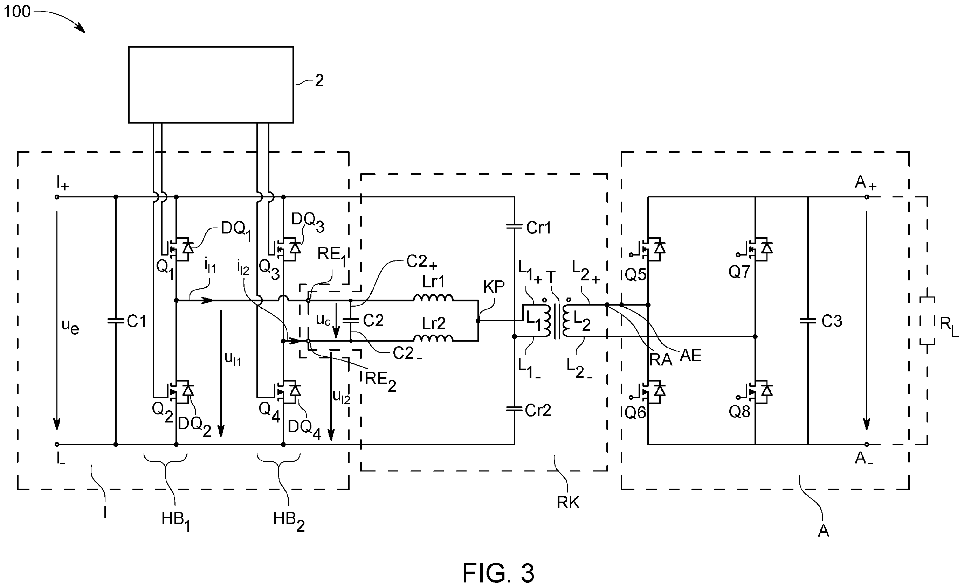

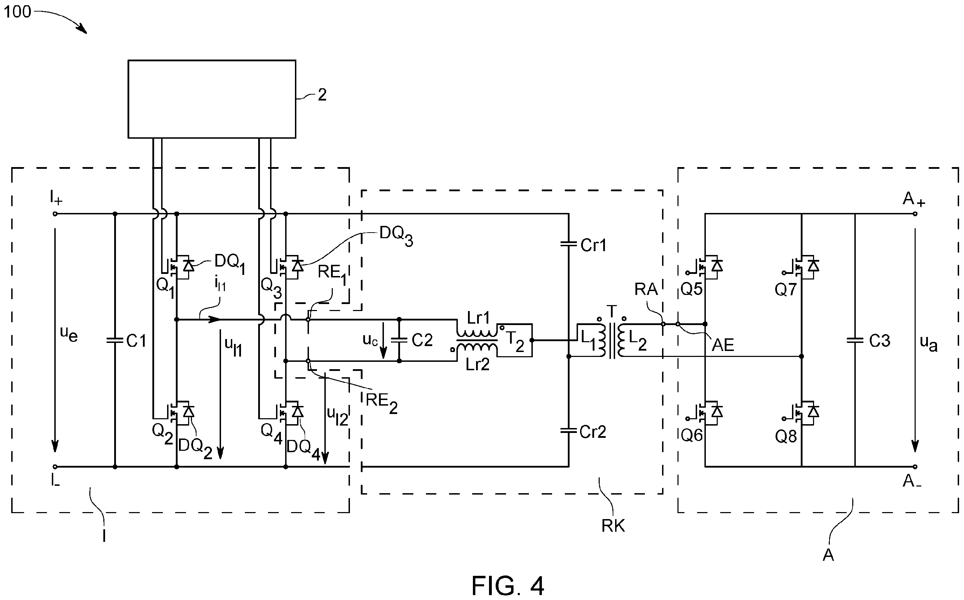

Da die konkrete Ausgestaltung der Verbindung zwischen dem Resonanzknotenpunkt KP und dem Ausgangsstufen-Eingang AE, sowie die konkrete Umsetzung des Blocks GR in der Ausgangsstufe A für eine grundlegende Erläuterung der Erfindung nicht von vorrangiger Bedeutung sind und insbesondere mittels unterschiedlicher, alternativer Varianten umgesetzt werden können, sind diese Punkte in der zunächst allgemeinen Darstellung nach Fig.2 offengelassen, und werden erst in den nachfolgenden Figuren 3 und 4 näher aufgegriffen. Im Vergleich zu den vorstehend diskutierten, aus dem Stand der Technik bekannten Konzepten, wie insbesondere jenem aus Fig.1, bilden die Halbbrücken HB1, HB2 keine Vollbrücke, sondern wirken als Halbbrücken. Die von Halbbrücken HB1, HB2 erzeugten Übertragungswechselspannung $U_{I1}$, $U_{I2}$ werden nicht addiert, wie das bei Vollbrücken ansonsten der Fall ist.

Erfindungsgemäß ist zwischen den ersten Resonanzkreis-Eingang $RE_1$ und den zweiten Resonanzkreis-Eingang $RE_2$ weiters ein Entlastungskondensator C2 geschaltet. Die erste Resonanzdrossel $L_{r1}$ der beiden Resonanzdrosseln $L_{r1}$, $L_{r2}$ ist hierbei zwischen einen ersten, mit dem ersten Resonanzkreis-Eingang RE1 verbundenen Kondensator-Anschluss C2+ des Entlastungskondensators C2 und den Resonanzknotenpunkt KP geschaltet und die zweite Resonanzdrossel $L_{r2}$ der beiden Resonanzdrosseln $L_{r1}$, $L_{r2}$ ist zwischen einen zweiten, mit dem zweiten Resonanzkreis-Eingang RE2 verbundenen Kondensator-Anschluss C2- des Entlastungskondensators C2 und den Resonanzknotenpunkt KP geschaltet, da der Entlastungskondensators C2 ansonsten kurzgeschlossen würde. Im Rahmen der Erfindung ergibt sich damit eine kirchhoffsche Masche in Form einer Serienschaltung aus den Resonanzdrosseln $L_{r1}$, $L_{r2}$ und dem zwischen die Resonanzkreis-Eingänge RE1, RE2, aber auch zwischen die Resonanzdrosseln $L_{r1}$, $L_{r2}$ geschalteten Entlastungskondensator C2, die insgesamt zwischen die zwei Halbbrücken HB1, HB2 geschaltet ist.

Die erfindungsgemäße Umsetzung des Resonanzkreises realisiert mehrere Vorteile. So wird durch die Resonanzdrosseln Lr1, Lr2 sichergestellt, dass bei einem Schließen der Halbleiterschalter Q1, Q2, Q3, Q4 nicht unmittelbar ein Strom $i_{I1}$, $i_{I2}$ über die Halbleiterschalter Q1, Q2, Q3, Q4 fließt, da zuerst die Induktivitäten der Resonanzdrosseln Lr1, Lr2 geladen werden müssen und sich der Strom $i_{I1}$, $i_{I2}$ erst über die Zeit aufbaut. Auf diese Weise wird zumindest näherungsweise stromfreies Einschalten auch abseits von Resonanzpunkten möglich.

In umgekehrter Weise trägt der Entlastungskondensator C2 dazu bei, dass im Zuge des Öffnens der Halbleiterschalter Q1, Q2, Q3, Q4 ein von den Induktivitäten der Resonanzdrosseln Lr1, Lr2 weitergetriebener Strom über den Entlastungskondensator C2 fließen kann, z.B. indem dem Entlastungskondensator C2 gespeicherte Ladung entnommen wird und/oder indem über den Entlastungskondensator C2 ein Strompfad über einen noch geschlossenen Halbleiterschalter Q1, Q2, Q3, Q4 geschlossen wird, und damit nicht über einen sich öffnenden Halbleiterschalter Q1, Q2, Q3, Q4 fließen muss. Auf diese Weise wird beim Ausschalten bzw. Schließen der Halbleiterschalter Q1, Q2, Q3, Q4 verhindert, dass eine Spannung an einem sich öffnenden Halbleiterschalter Q1, Q2, Q3, Q4 abfällt und gleichzeitig ein Strom durch diesen Halbleiterschalter Q1, Q2, Q3, Q4 fließt, was zu Verlusten führen würde. Der Entlastungskondensator C2 reduziert also die Ausschaltverluste der Halbleiterschalter Q1, Q2, Q3, Q4.

Mögliche, vorteilhafte Ausgestaltung eines den Ausführungen zu Fig.2 entsprechenden Resonanzwandlers 100 sind nachfolgend anhand der Figuren 3 und 4 gezeigt.

Im in Fig.3 gezeigten Resonanzwandler 100 ist im Resonanzkreis RK zwischen dem Resonanzknotenpunkt KP und dem Resonanzkreis-Ausgang RA ein Transformator T mit einer Primärwicklung L1 und einer Sekundärwicklung L2 vorgesehen, um die Eingangsstufe I mit der Ausgangsstufe A zu koppeln. Der Resonanzknotenpunkt KP ist dabei elektrisch leitend mit einem ersten Wicklungsanschluss L1+ der Primärwicklung L1 verbunden, und der Resonanzkreis-Ausgang RA ist elektrisch leitend mit einem ersten Wicklungsanschluss L2+ der Sekundärwicklung L2 verbunden. In dieser vorteilhaften Ausführung werden die Unterschiede zum Resonanzwandler 10 aus Fig.1 besonders deutlich, da klar erkennbar ist, dass die durch die Halbbrücken HB1, HB2 erzeugten Übertragungswechselspannungen $U_{l1}$, $U_{l2}$ im Rahmen der Erfindung nicht addiert werden, sondern parallel zueinander dem gleichen Resonanzknotenpunkt KP zugeführt werden, um anschließend zum Zweck einer weiteren Übertragung weitergeleitet zu werden. Insbesondere werden die zwischen den jeweiligen Halbleiterschaltern Q1, Q2 und Q3, Q4 liegenden Anschlusspunkte der Halbbrücken HB1, HB2 im Rahmen der Erfindung nicht über einen Transformator T miteinander verbunden, sondern alleine über die Resonanzdrosseln $L_{r1}$, $L_{r2}$. Die erfindungsgemäße Parallelschaltung der Halbbrücken HB1, HB2 ermöglicht, dass ein Stromfluss auch zustande kommt, wenn z.B. alleine der Halbleiterschalter Q1 geschlossen ist, oder alleine der Halbleiterschalter Q3 geschlossen ist, und alle übrigen Halbleiterschalter geöffnet sind. Bei einer aus dem Stand der Technik bekannten Vollbrücke müssen stets zwei diagonal gegenüberliegende Halbleiterschalter geschlossen sein, um einen geschlossenen Strompfad und damit einen Stromfluss zu ermöglichen, beispielsweise müssen die Halbleiterschalter Q1 und Q4 geschlossen sein, oder es müssen die Halbleiterschalter Q2 und Q3 geschlossen sein. Im Rahmen der Erfindung teilt sich so eine fließender Gesamtstrom auf die oberen Halbleiterschalter Q1, Q3 oder auf die unteren Halbleiterschalter Q2, Q4 auf, typischerweise in einem Verhältnis von zumindest näherungsweise 1:1.

In der in Fig.3 dargestellten Umsetzung ist weiters ein zweiter Wicklungsanschluss L2+ der Primärwicklung L1 über einen ersten Resonanz-Kondensator $C_{r1}$ mit dem ersten Eingangspol I+, und über einen zweiten Resonanz-Kondensator $C_{r2}$ mit dem zweiten Eingangspol I-verbunden. Die Resonanz-Kondensatoren $C_{r1}$, $C_{r2}$ definieren in dieser Ausführung die für den Betrieb des Resonanzwandlers 100 relevanten Resonanzfrequenzen $f_R$, an die die Schaltfrequenz fs zum Schalten der Halbleiterschalter Q1, Q2, Q3, Q4 gemäß den vorstehenden Ausführungen anzupassen ist.

Damit der Entlastungskondensator C2 die mithilfe der Resonanz-Kondensatoren $C_{r1}$, $C_{r2}$ und der Resonanzdrosseln $L_{r1}$, $L_{r2}$ definierte Resonanzfrequenz $f_R$ nur möglichst wenig beeinflusst, ist die Kapazität des Entlastungskondensators C2 typischerweise signifikant kleiner gewählt als jene der Resonanz-Kondensatoren $C_{r1}$, $C_{r2}$. In vorteilhafter Weise kann eine Kapazität eines Resonanz-Kondensators $C_r$, wie insbesondere eine Kapazität der Resonanz-Kondensatoren $C_{r1}$, $C_{r2}$, um einen vorgegebenen Faktor, vorzugsweise um das Zehnfache oder um das 20-Fache oder um das 100-Fache, größer sein als die Kapazität des Entlastungskondensators C2. Typischerweise ist in der praktischen Umsetzung der vorteilhaften Ausgestaltung nach Fig.3 vorgesehen, dass auch die Induktivitäten der Resonanzdrosseln $L_{r1}$, $L_{r2}$ um einen vorgegebenen Faktor, vorzugsweise um das Zehnfache oder um das 20-Fache oder um das 100-Fache, größer sind als eine Hauptinduktivität oder eine Streuinduktivität des Transformators T, um auch an dieser Stelle keine unerwünschten Querbeeinflussungen der eingestellten Resonanzfrequenzen zu erlauben.

Es sei angemerkt, dass zumindest theoretisch die Möglichkeit existiert, auf die Resonanz-Kondensatoren $C_{r1}$, $C_{r2}$ zu verzichten, und alleine über den Entlastungskondensator C2 eine Einstellung der Resonanzfrequenzen vorzunehmen. Problematisch an dieser Vorgehensweise ist allerdings, dass dazu, bei in der Praxis üblichen, Schaltfrequenzen im Vergleich zu einem Aufbau mit eigenen Resonanz-Kondensatoren $C_{r1}$, $C_{r2}$ vielfach entscheidend größere Kapazitäten des Entlastungskondensators C2 erforderlich wären, was nur noch langsame Spannungsanstiege der Übertragungswechselspannungen $U_{l1}$, $U_{l2}$ ermöglichen würde. Aus diesem Grund ist eine Verwendung zumindest eines separaten Resonanz-Kondensators $C_{r1}$, $C_{r2}$ vorteilhaft, wo von einer Einstellung von Resonanzfrequenzen über den Entlastungskondensator C2 abgesehen werden kann.

Im in Fig.3 gezeigten Fall kann bei einer den obigen Ausführungen entsprechenden Wahl des Entlastungskondensators C2 und/oder der Induktivitäten des Transformators T die dominierende Resonanzfrequenz des Resonanzwandlers 100 mit den Resonanzdrosseln $L_{r1}$, $L_{r2}$ und den Resonanz-Kondensatoren $C_{r1}$, $C_{r2}$ in guter Näherung als

$$f_R = \frac{1}{2 * \pi * \sqrt{Cr1 + Cr2 * \left(\frac{Lr1 * Lr2}{Lr1 + Lr2}\right)}}$$

abgeschätzt werden, woraus der verschwindende Einfluss des Entlastungskondensators C2 sowie der Induktivitäten des Transformators T ersichtlich ist.

Da beide Resonanz-Kondensatoren $C_{r1}$, $C_{r2}$, wie erwähnt, keine unabdingbaren Bestandteile eines erfindungsgemäßen Resonanzwandlers 100 darstellen, sind auch Ausführungen denkbar, in denen lediglich ein einzelner Resonanz-Kondensator $C_{r1}$ vorgesehen ist, und der komplementäre Resonanz-Kondensator $C_{r2}$ nicht herangezogen wird. Selbes gilt für die in Fig.3 eingezeichneten Stützkondensatoren C1 und C3, die in vielen praktische Anwendungsfällen vorteilhaft sind, um die aufgenommenen bzw. ausgegebenen Spannungen zu stabilisieren, aber ebenso keine zur Umsetzung der Erfindung zwingend vorzusehenden Bauelemente darstellen.

Fig.4 zeigt eine weitere Umsetzungsvariante der gegenständlichen Erfindung, in der die erfindungsgemäßen Resonanzdrosseln $L_{r1}$, $L_{r2}$ nicht als separate

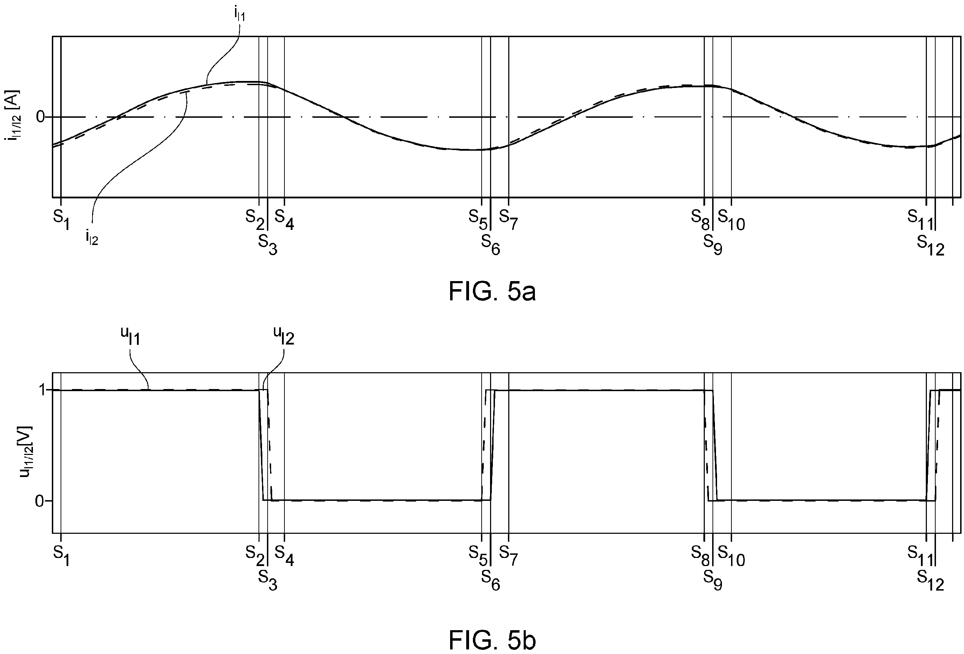

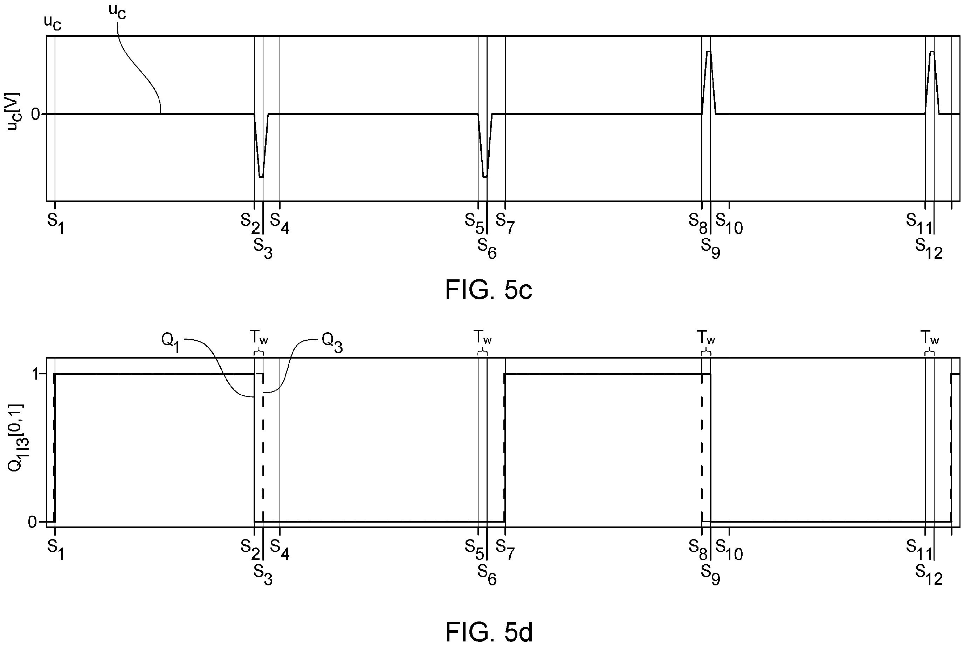

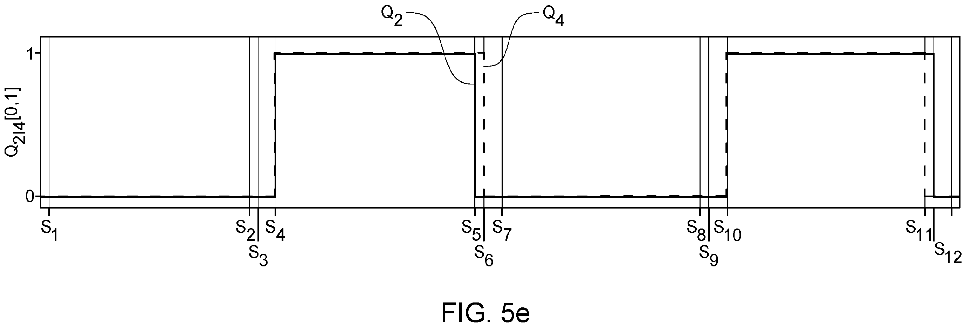

Bauteile realisiert sind, sondern mittels eines Transformators T2, der zumindest zwei Drosseln aufweist. Die Resonanzdrosseln $L_{r1}$, $L_{r2}$ sind so durch lediglich ein Bauteil realisiert, was in der praktischen Umsetzung die Einsparung von Platz und Kosten erlaubt. Die Wicklungen des zweiten Transformators T2 sind überdies gegensinnig gewickelt, wodurch insbesondere bei der nachfolgend anhand von Fig.5 beschriebenen Ansteuerungsart die Hauptinduktivität des Transformators T2 eliminiert wird und alleine die Streuinduktivitäten des Transformators T2 als wirksame Induktivitäten verbleiben. Einerseits wird auf diese Weise erreicht, dass alleine durch Wahl der Streuinduktivitäten die Strom- und Spannungsdynamiken in den jeweiligen Pfaden festgelegt werden kann, anderseits werden Querbeeinflussungen zwischen den beiden Pfaden unterbunden.

Neben der bisher beschriebenen Topologie des erfindungsgemäßen Resonanzwandlers 100 wurde im Rahmen der Erfindung erkannt, dass die bereits genannten, positiven Effekte der Erfindung durch eine geeignete Ansteuerung weiter verstärkt werden können. Wie dazu im Detail vorgegangen werden kann, ist nachfolgend anhand von Fig.5 dargestellt. In Fig.5 sind in Fig.5a Zeitverläufe der Ströme $i_{l1}$, $i_{l2}$ gezeigt, in Fig.5b Zeitverläufe der

Übertragungswechselspannungen $U_{l1}$, $U_{l2}$, in Fig.5c ein Zeitverlauf der am Entlastungskondensator C2 abfallenden Spannung $u_c$, in Fig.5d Zustände des Schalterpaares Q1, Q2 der ersten Halbbrücke HB1 (0 ... geöffnet, 1... geschlossen) und in Fig.5e Zustände des Schalterpaares Q3, Q4 der zweiten Halbbrücke HB2.

Zum Zweck einer vorteilhaften Ansteuerung eines erfindungsgemäßen Resonanzwandlers 100 kann gemäß Fig.5 vorgesehen werden, in einem ersten Ansteuerschritt S1 die oberen Halbleiterschalter Q1, Q3 beider Halbbrücken HB1, HB2 gleichzeitig zu schließen, danach in einem zweiten Ansteuerschritt S2 zuerst den oberen Halbleiterschalter Q1 der ersten Halbbrücke HB1 zu öffnen, danach nach einer vorgegebenen Wartedauer $T_w$ in einem dritten Ansteuerschritt S3 den oberen Halbleiterschalter Q3 der zweiten Halbbrücke HB2 zu öffnen, danach in einem vierten Ansteuerschritt S4 die unteren Halbleiterschalter Q2, Q4 beider Halbbrücken HB1, HB2 gleichzeitig zu schließen, danach in einem fünften Ansteuerschritt S5 zuerst den unteren Halbleiterschalter Q2 der ersten Halbbrücke HB1 zu öffnen, danach nach einer vorgegebenen Wartedauer $T_w$ in einem sechsten Ansteuerschritt S6 den unteren Halbleiterschalter Q4 der zweiten Halbbrücke HB2 zu öffnen, danach in einem siebten Ansteuerschritt S7 die oberen Halbleiterschalter Q1, Q3 beider Halbbrücken HB1, HB2 gleichzeitig zu schließen, danach in einem achten Ansteuerschritt S8 zuerst den oberen Halbleiterschalter Q3 der zweiten Halbbrücke HB2 zu öffnen, danach nach einer vorgegebenen Wartedauer $T_w$ in einem neunten Ansteuerschritt S9 den oberen Halbleiterschalter Q1 der ersten Halbbrücke HB1 zu öffnen, danach in einem zehnten Ansteuerschritt S10 die unteren Halbleiterschalter Q2, Q4 beider Halbbrücken HB1, HB2 gleichzeitig zu schließen, danach in einem elften Ansteuerschritt S11 zuerst den unteren Halbleiterschalter Q4 der zweiten Halbbrücke HB2 zu öffnen und danach nach einer vorgegebenen Wartedauer $T_w$ in einem zwölften Ansteuerschritt S12 den unteren Halbleiterschalter Q2 der ersten Halbbrücke HB1 zu öffnen.

Die oberen Halbleiterschalter Q1, Q3 bzw. die unteren Halbleiterschalter Q2, Q4 werden demnach immer gleichzeitig eingeschalten, das Ausschalten passiert aber immer um eine vorgegebenen Zeitdauer $T_w$ versetzt und abwechselnd. Dadurch ergeben sich insgesamt symmetrische Ströme $i_{l1}$, $i_{l2}$, wobei während der ersten sechs Ansteuerschritte S1-S6 der Strom $i_{l1}$ dem Strom $i_{l2}$ voreilt, in den Ansteuerschritten S7-S12 hingegen der Strom $i_{l2}$ dem Strom $i_{l1}$ voreilt. Auf diese Weise wird der Entlastungskondensator C2 stets gleichmäßig geladen und entladen, sodass sich im Lauf des Betriebes keine bleibende Spannung $u_c$ am Entlastungskondensator C2 ausbilden kann. Dank der versetzten Ansteuerung der beiden Halbbrücken HB1, HB2 entlasten sich die Halbbrücken HB1, HB2 beim Ausschalten gegenseitig, wodurch die an den Halbleiterschaltern Q1, Q2, Q3, Q4 auftretenden Schaltverluste in einem weiten Bereich auch oberhalb der Resonanzfrequenz $f_R$ reduziert werden.

Bezugnehmend auf die beschriebene Ansteuerungsabfolge kann das mithilfe der gegenständlichen Erfindung erreichte, nahezu verlustfreie Schalten am Beispiel des Halbleiterschalters Q3 auch anhand von Spannungen erklärt werden. Konkret ist der Entlastungskondensator C2 zu Beginn des Ausschaltens des Halbleiterschalters Q3, wenn Q1 und Q3 zuvor beide eingeschalten waren, zunächst auf null Volt geladen (beide Anschlüsse des Entlastungskondensators C2 besitzen das Potential des Eingangspols I+, der Entlastungskondensators C2 wirkt zunächst wie ein Kurzschluss). Der Halbleiterschalter Q3 schaltet damit bei einer (nahezu) verschwindenden über ihn abfallenden Spannung aus. Nach dem Öffnen des Halbleiterschalters Q3 bildet sich ein Strompfad über den Entlastungskondensator C2 und den Halbleiterschalter Q1, sodass sich der Entlastungskondensator C2 über den noch eingeschalteten Q1 auf die Eingangsspannung $u_e$ auflädt. Der Spannungsanstieg wird dabei durch die Kapazität des Entlastungskondensator C2, die Höhe der Eingangsspannung $u_e$ und den fließenden Strom $i_{l2}$ bestimmt. Beim Ausschalten von Q1 ist der Entlastungskondensator C2 auf die Eingangsspannung $u_e$ geladen, sodass der dem Halbleiterschalter Q1 zugewandte Anschluss des Entlastungskondensator C2 unverändert das Potential des Eingangspols I+ aufweist. Auch die Spannungsdifferenz am Schalter Q1 ist damit erneut nahezu null Volt, der Schalter Q1 schaltet folglich ebenfalls bei einer verschwindenden Spannung aus ("Zero Voltage Switching", "ZVS").

In einer voreilhaften Weise kann die genannte Wartedauer $T_w$ in Abhängigkeit von der Kapazität des Entlastungskondensators C2 gewählt werden, oder es kann umgekehrt die Kapazität des Entlastungskondensators C2 an eine gewünschte Wartedauer $T_W$ angepasst werden. Eine gewünschte Wartedauer $T_W$ kann beispielsweise aus einem gewünschten Spannungsanstieg der Übertragungswechselspannungen $U_{l1}$, $U_{l2}$ abgeleitet werden, z.B. aus einem maximalen Spannungsanstieg $\frac{du_{max}}{dt}$, welcher sich in bekannter Weise insbesondere aus Erwägungen zur elektromagnetischen Verträglichkeit ("EMV") ergeben kann. Da sich der Entlastungskondensator C2 gemäß den vorstehenden Ausführungen auf die Eingangsspannung ue aufladen soll, kann die Wartedauer $T_W$ z.B. mittels der Vorschrift

$$T_W = \frac{u_e}{\frac{du_{max}}{dt}}$$

ermittelt werden. Umgekehrt kann natürlich auch gemäß

$$\frac{du_{max}}{dt} = \frac{u_e}{T_W}$$

ein maximaler Spannungsanstieg festgelegt werden. Da weiters die Maximalwerte der Ströme $i_{l1}$ bzw. $i_{l2}$ typischerweise bekannt sind, kann daraus mittels der Beziehung

$$C_2 = \frac{I_{max}}{\frac{du_{max}}{dt}}$$

eine Kapazität des Entlastungskondensators C2 bestimmt werden.

Ebenso kann bei der Wahl der Kapazität des Entlastungskondensators C2 ein in der Fachliteratur hinlänglich bekannter Gleichtakt-Störstrom $I_{cm}$ (engl. common mode current) berücksichtigt werden. In bekannter Weise ergeben sich Gleichtakt-Störströme $I_{cm}$ bei Halbleiterschaltern Q1, Q2, Q3, Q4 vielfach als parasitäre Störströme über parasitäre Kapazitäten $C_{par}$ der Halbleiterschaltern Q1, Q2, Q3, Q4, die durch Änderungen der an den Halbleiterschaltern Q1, Q2, Q3, Q4 abfallenden Spannungen ($u_e$- $u_{l1,l2}$) bzw. $u_{l1,l2}$ hervorgerufen werden. In guter Näherung können diese Gleichtakt-Störströme $I_{cm}$ als

$$I_{cm} = C_{par} \cdot \frac{du_{l1,l2}}{dt}$$

dargestellt werden, sodass beispielsweise aus einem maximalen Gleichtakt-Störstrom $I_{cm}$ eine maximale Spannungsänderung ermittelt werden kann:

$$\frac{du_{l1,l2}}{dt} = \frac{I_{cm}}{C_{par}}$$

Aus einer so ermittelten, maximalen Spannungsänderung $\frac{du_{l1,l2}}{dt}$ können gemäß den obigen Beziehungen, z.B. $T_W = \frac{u_e}{\frac{du_{max}}{dt}}$, Kapazitätswerte für einen Entlastungskondensators C2 oder eine Wartezeit

$T_W$ bestimmt werden.

Mit der Kapazität des Entlastungskondensators C2 ist es folglich möglich, die Steigung $\frac{d}{dt}u_{l1,l2}$ an den Halbleiterschaltern Q1, Q2, Q3, Q4 festzulegen. Je größer die Kapazität, desto länger dauert das Umschwingen und damit der Aufbau der an den Halbleiterschaltern Q1, Q2, Q3, Q4 abfallenden Spannungen. Der Entlastungskondensator C2 erlaubt damit einerseits eine Entlastung der Halbleiterschaltern Q1, Q2, Q3, Q4, insbesondere durch eine Reduktion von Gleichtakt-Störungen $I_{cm}$, andererseits trägt auch er zu einer Verbesserung des EMV-Verhaltens ("Elektromagnetische Verträglichkeit") bei, da bei höheren Steigungen $\frac{d}{dt}u_{l1,l2}$ stärkere Störungen in Form elektromagnetischer Wellen emittiert werden.

In einer weiteren, besonders vorteilhaften Ausgestaltung der gegenständlichen Erfindung kann in der beschriebenen Abfolge zum Schalten der Halbleiterschalter Q1, Q2, Q3, Q4 zusätzlich auf die elektrischen Verhältnisse in den im gegebenen Fall zu den Halbleiterschaltern Q1, Q2, Q3, Q4 parallel geschalteten Freilaufdioden DQ1, DQ2, DQ3, DQ4 Rücksicht genommen werden. Konkret können dazu die Halbleiterschalter Q1, Q3 dann eingeschaltet, d.h. geschlossen werden, wenn in einer Freilaufdiode DQ1, DQ2, DQ3, DQ4, die zu einem zu schaltenden Halbleiterschalter Q1, Q2, Q3, Q4 bereits Strom fließt. Ein im Rahmen der gegenständlichen Ausführungen bedeutender Grund, warum in einer Freilaufdiode DQ1, DQ2, DQ3, DQ4 bereits Strom fließt, noch bevor ein zugehöriger Halbleiterschalter Q1, Q2, Q3, Q4 selbst geschlossen ist, ist, dass die Resonanzdrosseln Lr1, Lr2 gemäß Induktionsprinzip einen Strom il1, il2 weitertreiben, und sich ein entsprechender Strompfad über eine genannte Freilaufdiode DQ1, DQ2, DQ3, DQ4 ausbildet. Der Spannungsabfall ($u_e$-$u_{l1,l2}$) bzw. $u_{l1,l2}$ über die Halbleiterschalter Q1, Q2, Q3, Q4 ist in einem solchen Fall nahezu null Volt, was eine weitere Reduktion von Verlusten erlaubt. In einer ebenso vorteilhaften Weise können Freilaufdioden DQ1, DQ2, DQ3, DQ4 auch dazu eingesetzt werden, eine an einem Entlastungskondensator C2 gespeicherte Ladung abzubauen.

**Patentansprüche**

1. Elektrischer Resonanzwandler (100), umfassend eine Eingangsstufe (I) mit einem ersten Eingangspol (I+) und einem zweiten Eingangspol (I_) zum Anlegen einer elektrischen Eingangsspannung ($u_e$), eine Ausgangsstufe (A) mit einem ersten Ausgangspol (A.) und einem zweiten Ausgangspol (A_) zum Ausgeben einer elektrischen Ausgangsspannung ($u_a$), und einen, zumindest eine Resonanzfrequenz ($f_R$) des Resonanzwandlers (100) festlegenden Resonanzkreis (RK) zum elektrischen Koppeln der Ein-

gangsstufe (I) mit der Ausgangsstufe (A), wobei die Eingangsstufe (I) eine zwischen den ersten und den zweiten Eingangspol ($I_+$, $I_-$) geschaltete erste Halbbrücke (HB1) mit einem oberen Halbleiterschalter (Q1) und einem unteren Halbleiterschalter (Q2) aufweist, um eine erste Übertragungswechselspannung ($U_{l1}$) zu erzeugen, wobei der Resonanzkreis (RK) einen ersten Resonanzkreis-Eingang (RE1) aufweist, der zwischen dem oberen und dem unteren Halbleiterschalter (Q1, Q2) der ersten Halbbrücke (HB1) mit der ersten Halbbrücke (HB1) verbunden ist, um die erste Übertragungswechselspannung ($U_{l1}$) aufzunehmen und in eine an einem Resonanzkreis-Ausgang (RA) des Resonanzkreises (RK) ausgegebene Resonanzkreis-Ausgangsspannung ($U_{RA}$) zu übertragen, und wobei die Ausgangsstufe (A) einen Ausgangsstufen-Eingang (AE) aufweist, um die Resonanzkreis-Ausgangsspannung ($U_{RA}$) aufzunehmen und in die Ausgangsspannung ($u_a$) zu übertragen, **dadurch gekennzeichnet, dass** in der Eingangsstufe (I) eine zur ersten Halbbrücke (HB1) parallel geschaltete, zweite Halbbrücke (HB2) mit einem oberen Halbleiterschalter (Q3) und einem unteren Halbleiterschalter (Q4) vorgesehen ist, um eine zweite Übertragungswechselspannung ($U_{l2}$) zu erzeugen, **dass** der Resonanzkreis (RK) einen zweiten Resonanzkreis-Eingang (RE2) aufweist, der zwischen dem oberen und dem unteren Halbleiterschalter (Q3, Q4) der zweiten Halbbrücke (HB2) mit der zweiten Halbbrücke (HB2) verbunden ist, um die zweite Übertragungswechselspannung ($U_{l2}$) aufzunehmen, **dass** zwischen den ersten Resonanzkreis-Eingang (RE1) und den zweiten Resonanzkreis-Eingang (RE2) ein Entlastungskondensator (C2) geschaltet ist **und dass** der erste Resonanzkreis-Eingang (RE1) und der zweite Resonanzkreis-Eingang (RE2) jeweils über eine Resonanzdrossel ($L_{r1}$, $L_{r2}$) mit einem Resonanzknotenpunkt (KP) im Resonanzkreis (RK) verbunden sind, um die erste Übertragungswechselspannung ($U_{l1}$) und die zweite Übertragungswechselspannung ($U_{l2}$) über den Resonanzknotenpunkt (KP) in die am Resonanzkreis-Ausgang (RA) ausgegebene Resonanzkreis-Ausgangsspannung ($U_{RA}$) zu übertragen.

2. Elektrischer Resonanzwandler (100) nach Anspruch 1, **dadurch gekennzeichnet, dass** im Resonanzkreis (RK), vorzugsweise zwischen dem Resonanzknotenpunkt (KP) und dem Resonanzkreis-Ausgang (RA), zumindest ein Resonanz-Kondensator ($C_r$) vorgesehen ist, um die zumindest eine vom Resonanzkreis (RK) festgelegte Resonanzfrequenz ($f_R$) festzulegen.

3. Elektrischer Resonanzwandler (100) nach Anspruch 1 oder 2, **dadurch gekennzeichnet, dass** im Resonanzkreis (RK) zwischen dem Resonanzknotenpunkt (KP) und dem Resonanzkreis-Ausgang (RA) ein Transformator (T) mit einer Primärwicklung ($L_1$) und einer Sekundärwicklung ($L_2$) vorgesehen ist, um die Eingangsstufe (I) mit der Ausgangsstufe (A) zu koppeln, wobei der Resonanzknotenpunkt (KP) elektrisch leitend mit einem ersten Wicklungsanschluss ($L_{1+}$) der Primärwicklung ($L_1$) verbunden ist und der Resonanzkreis-Ausgang (RA) elektrisch leitend mit einem ersten Wicklungsanschluss ($L_{2+}$) der Sekundärwicklung ($L_2$) verbunden ist.

4. Elektrischer Resonanzwandler (100) nach Anspruch 3, **dadurch gekennzeichnet, dass** ein zweiter Wicklungsanschluss ($L_{1-}$) der Primärwicklung (L1) über einen ersten Resonanz-Kondensator ($C_{r1}$) mit dem ersten Eingangspol (I+) verbunden ist und/oder über einen zweiten Resonanz-Kondensator ($C_{r2}$) mit dem zweiten Eingangspol ($I_-$) verbunden ist, um die zumindest eine Resonanzfrequenz ($f_R$) festzulegen und/oder ein erster Wicklungsanschluss ($L_{1-}$) der Primärwicklung ($L_1$) über einen ersten Resonanz-Kondensator ($C_{r1}$) mit dem ersten Eingangspol (I+) verbunden ist und/oder über einen zweiten Resonanz-Kondensator ($C_{r2}$) mit dem zweiten Eingangspol ($I_-$) verbunden ist, um die zumindest eine Resonanzfrequenz ($f_R$) festzulegen.

5. Elektrischer Resonanzwandler (100) nach Anspruch 3 oder 4, **dadurch gekennzeichnet, dass** eine Kapazität des zumindest einen Resonanz-Kondensators ($C_r$) um einen vorgegebenen Faktor, vorzugsweise um das Zehnfache oder um das 20-Fache oder um das 100-Fache, größer ist als eine Kapazität des Entlastungskondensators ($C_2$) **und dass** eine Induktivität einer der Resonanzdrosseln ($L_{r1}$, $L_{r2}$) um einen vorgegebenen Faktor, vorzugsweise um das Zehnfache oder um das 20-Fache oder um das 100-Fache, größer ist als eine Hauptinduktivität oder Streuinduktivität des Transformators (T).

6. Elektrischer Resonanzwandler (100) nach einem der vorhergehenden Ansprüche, **dadurch gekennzeichnet, dass** eine Eingangs-Gleichspannung als Eingangsspannung ($u_e$) vorgesehen ist, **dass** eine Ausgangs-Gleichspannung als Ausgangsspannung ($u_a$) vorgesehen ist **und dass** die Ausgangsstufe (A) einen Gleichrichter zum Erzeugen der Ausgangs-Gleichspannung aus der ersten und zweiten Übertragungswechselspannung ($U_{l1}$, $U_{l2}$) aufweist.

7. Elektrischer Resonanzwandler (100) nach einem der vorhergehenden Ansprüche, **dadurch gekennzeichnet, dass** zu den in der ersten Halbbrücke (HB1) und der zweiten Halbbrücke (HB2) vorgesehenen Halbleiterschaltern (Q1, Q2, Q3, Q4) je eine Freilaufdiode (DQ1, DQ2, DQ3, DQ4) parallelgeschaltet ist, welche jeweils ausgestaltet ist, zumindest einen Teil einer am Entlastungskondensator (C2) gespeicherten elektrischen Ladung abzubauen.

8. Elektrischer Resonanzwandler (100) nach einem der vorhergehenden Ansprüche, **dadurch gekennzeichnet, dass** eine erste Resonanzdrossel (Lr1) der beiden Resonanzdrosseln ($L_{r1}$, $L_{r2}$) zwischen einen ersten, mit dem ersten Resonanzkreis-Eingang (RE1) verbundenen Kondensator-Anschluss ($C_{2+}$) des Entlastungskondensators (C2) und den Resonanzknotenpunkt (KP) geschaltet ist **und dass** eine zweite Resonanzdrossel ($L_{r2}$) der beiden Resonanzdrosseln ($L_{r1}$, $L_{r2}$) zwischen einen zweiten, mit dem zweiten Resonanzkreis-Eingang (RE2) verbundenen Kondensator-Anschluss ($C_{2-}$) des Entlastungskondensators (C2) und den Resonanzknotenpunkt (KP) geschaltet ist.

9. Elektrischer Resonanzwandler (100) nach einem der vorhergehenden Ansprüche, **dadurch gekennzeichnet, dass** der Resonanzwandler (100) eine Steuereinheit (2) aufweist, welche ausgestaltet ist, zum Ansteuern des Resonanzwandlers (100) in einem ersten Ansteuerschritt (S1) die oberen Halbleiterschalter (Q1, Q3) beider Halbbrücken (HB1, HB2) gleichzeitig zu schließen, danach in einem zweiten Ansteuerschritt (S2) zuerst den oberen Halbleiterschalter (Q1) der ersten Halbbrücke (HB1) zu öffnen, danach nach einer vorgegebenen Wartedauer ($T_w$) in einem dritten Ansteuerschritt (S3) den oberen Halbleiterschalter (Q3) der zweiten Halbbrücke (HB2) zu öffnen, danach in einem vierten Ansteuerschritt (S4) die unteren Halbleiterschalter (Q2, Q4) beider Halbbrücken (HB1, HB2) gleichzeitig zu schließen, danach in einem fünften Ansteuerschritt (S5) zuerst den unteren Halbleiterschalter (Q2) der ersten Halbbrücke (HB1) zu öffnen, danach nach einer vorgegebenen Wartedauer ($T_w$) in einem sechsten Ansteuerschritt (S6) den unteren Halbleiterschalter (Q4) der zweiten Halbbrücke (HB2) zu öffnen, danach in einem siebten Ansteuerschritt (S7) die oberen Halbleiterschalter (Q1, Q3) beider Halbbrücken (HB1, HB2) gleichzeitig zu schließen, danach in einem achten Ansteuerschritt (S8) zuerst den oberen Halbleiterschalter (Q3) der zweiten Halbbrücke (HB2) zu öffnen, danach nach einer vorgegebenen Wartedauer ($T_w$) in einem neunten Ansteuerschritt (S9) den oberen Halbleiterschalter (Q1) der ersten Halbbrücke (HB1) zu öffnen, danach in einem zehnten Ansteuerschritt (S10) die unteren Halbleiterschalter (Q2, Q4) beider Halbbrücken (HB1, HB2) gleichzeitig zu schließen, danach in einem elften Ansteuerschritt (S11) zuerst den unteren Halbleiterschalter (Q4) der zweiten Halbbrücke (HB2) zu öffnen und danach nach einer vorgegebenen Wartedauer ($T_w$) in einem zwölften Ansteuerschritt (S12) den unteren Halbleiterschalter (Q2) der ersten Halbbrücke (HB1) zu öffnen.

10. Elektrischer Resonanzwandler (100) nach Anspruch 9, **dadurch gekennzeichnet, dass** die Kapazität des Entlastungskondensators (C2) in Abhängigkeit der vorgegebenen Wartedauer ($T_w$) gewählt ist.

11. Elektrischer Resonanzwandler (100) nach Anspruch 10, **dadurch gekennzeichnet, dass** die vorgegebene Wartedauer ($T_w$) in Abhängigkeit eines maximalen Spannungsanstiegs der von den Halbbrücken (HB1, HB2) erzeugten Spannungen ($U_{I1}$, $U_{I2}$) gewählt ist.

12. Elektrischer Resonanzwandler (100) nach Anspruch 11, **dadurch gekennzeichnet, dass** der maximale Spannungsanstieg aus einem durch die Halbleiterschalter (Q1, Q2, Q3, Q4) der Halbbrücken (HB1, HB2) fließenden Gleichtakt-Störstrom ermittelt wird.

13. Verfahren zum Betrieb eines elektrischen Resonanzwandlers (100), wobei zwischen einen ersten Eingangspol ($I_+$) und einen zweiten Eingangspol ($I_-$) einer Eingangsstufe (I) des Resonanzwandlers (100) eine elektrische Eingangsspannung ($u_e$) angelegt wird, wobei zwischen einem ersten Ausgangspol (A.) und einem zweiten Ausgangspol (A_) einer Ausgangsstufe (A) des Resonanzwandlers (100) eine elektrische Ausgangsspannung ($u_a$) ausgegeben wird, wobei die Eingangsstufe (I) mit der Ausgangsstufe (A) über einen, zumindest eine Resonanzfrequenz ($f_R$) des Resonanzwandlers (100) festlegenden, Resonanzkreis (RK) elektrisch gekoppelt wird, wobei eine erste Übertragungswechselspannung ($U_{I1}$) erzeugt wird, indem ein oberer Halbleiterschalter (Q1) und ein unterer Halbleiterschalter (Q2) einer zwischen den ersten und zweiten Eingangspol ($I_+$, $I_-$) geschalteten ersten Halbbrücke (HB1) angesteuert werden, wobei der Resonanzkreis (RK) über einen ersten Resonanzkreis-Eingang (RE1), der zwischen dem oberen und dem unteren Halbleiterschalter (Q1, Q2) der ersten Halbbrücke (HB1) mit der ersten Halbbrücke (HB1) verbunden ist, die erste Übertragungswechselspannung ($U_{I1}$) aufnimmt und in eine an einem Resonanzkreis-Ausgang (RA) des Resonanzkreises (RK) ausgegebene Resonanzkreis-Ausgangsspannung ($U_{RA}$) überträgt, und wobei die Ausgangsstufe (A) einen Ausgangsstufen-Eingang (AE) aufweist, um die Resonanzkreis-Ausgangsspannung ($U_{RA}$) aufzunehmen und in die Ausgangsspannung ($u_a$) zu übertragen, **dadurch gekennzeichnet, dass** eine zweite Übertragungswechselspannung ($U_{I2}$) erzeugt wird, indem ein oberer Halbleiterschalter (Q3) und ein unterer Halbleiterschalter (Q4) einer zur ersten Halbbrücke (HB1) parallel geschalteten, zweiten Halbbrücke (HB2) angesteuert werden, **dass** der Resonanzkreis (RK) über einen zweiten Resonanzkreis-Eingang (RE2), der zwischen dem oberen und dem unteren Halbleiterschalter (Q3, Q4) der zweiten Halbbrücke (HB2) mit der zweiten Halbbrücke (HB2) verbunden ist, die zweite Übertragungswechselspannung ($U_{I2}$) aufnimmt, **dass** zwischen den ersten Resonanzkreis-Eingang (RE1) und den zweiten Resonanzkreis-Eingang (RE2) ein Entlastungskondensator (C2) geschaltet wird **und dass** der erste Resonanzkreis-Eingang (RE1) und der zweite Resonanzkreis-Eingang (RE2) jeweils über eine Resonanzdrossel ($L_{r1}$, $L_{r2}$) mit einem Resonanzknotenpunkt (KP) im Resonanzkreis (RK) verbunden wird, um die erste Übertragungswechselspannung ($U_{I1}$) und die zweite Übertragungswechselspannung ($U_{I2}$) über den Resonanzknotenpunkt (KP) in die am Resonanzkreis-Ausgang (RA) ausgegebene Resonanzkreis-Ausgangsspannung ($U_{RA}$) zu übertragen.

14. Verfahren nach Anspruch 13, **dadurch gekennzeichnet, dass** zum Ansteuern der Halbleiterschalter (Q1, Q2) der ersten Halbbrücke (HB1) und zum Ansteuern der Halbleiterschalter (Q3, Q4) der zweiten Halbbrücke (HB2) in einem ersten Ansteuerschritt (S1) die oberen Halbleiterschalter (Q1, Q3) beider Halbbrücken (HB1, HB2) gleichzeitig geschlossen werden, danach in einem zweiten Ansteuerschritt (S2) zuerst der obere Halbleiterschalter (Q1) der ersten Halbbrücke (HB1) geöffnet wird, danach nach einer vorgegebenen Wartedauer ($T_w$) in einem dritten Ansteuerschritt (S3) der obere Halbleiterschalter (Q3) der zweiten Halbbrücke (HB2) geöffnet wird, danach in einem vierten Ansteuerschritt (S4) die unteren Halbleiterschalter (Q2, Q4) beider Halbbrücken (HB1, HB2) gleichzeitig geschlossen werden, danach in einem fünften Ansteuerschritt (S5) zuerst der untere Halbleiterschalter (Q2) der ersten Halbbrücke (HB1) geöffnet wird, danach nach einer vorgegebenen Wartedauer ($T_w$) in einem sechsten Ansteuerschritt (S6) der untere Halbleiterschalter (Q4) der zweiten Halbbrücke (HB2) geöffnet wird, danach in einem siebten Ansteuerschritt (S7) die oberen Halbleiterschalter (Q1, Q3) beider Halbbrücken (HB1, HB2) gleichzeitig geschlossen werden, danach in einem achten Ansteuerschritt (S8) zuerst der obere Halbleiterschalter (Q3) der zweiten Halbbrücke (HB2) geöffnet wird, danach nach einer vorgegebenen Wartedauer ($T_w$) in einem neunten Ansteuerschritt (S9) der obere Halbleiterschalter (Q1) der ersten Halbbrücke (HB1) geöffnet wird, danach in einem zehnten Ansteuerschritt (S10) die unteren Halbleiterschalter (Q2, Q4) beider Halbbrücken (HB1, HB2) gleichzeitig geschlossen werden, danach in einem elften Ansteuerschritt (S11) zuerst der untere Halbleiterschalter (Q4) der zweiten Halbbrücke (HB2) geöffnet wird und danach nach einer vorgegebenen Wartedauer ($T_w$) in einem zwölften Ansteuerschritt (S12) der untere Halbleiterschalter (Q2) der ersten Halbbrücke (HB1) geöffnet wird.

15. Verfahren nach Anspruch 14, **dadurch gekennzeichnet, dass** die in der ersten und zweiten Halbbrücke (HB1, HB2) vorgesehenen Halbleiterschalter (Q1, Q2, Q3, Q4) geschlossen werden, wenn in zu den oberen Halbleiterschalter (Q1, Q3) parallel geschalteten Freilaufdioden (DQ1, DQ3) ein elektrischer Strom fließt.

FIG. 1

FIG. 2

FIG. 3

FIG. 4

FIG. 5a

FIG. 5b

FIG. 5c

FIG. 5d

FIG. 5e

Europäisches
Patentamt

European
Patent Office

Office européen
des brevets

**EUROPÄISCHER RECHERCHENBERICHT**

**Nummer der Anmeldung**

**EP 23 19 7474**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 10 819 244 B1 (SHI YUXIANG [US] ET AL) 27. Oktober 2020 (2020-10-27) | 1-8,13 | INV. H02M3/335 |
| Y | * Absätze [0019], [0022], [0028], [0029], [0032], [0033]; Abbildungen 5,6,8 * | 9-12,14, 15 | H02M3/00 H02M3/158 H02M1/00 H02M1/34 |
| | ----- | | |
| Y | EP 3 972 105 A1 (INFINEON TECHNOLOGIES AUSTRIA AG [AT]) 23. März 2022 (2022-03-23) * Absätze [0038], [0048], [0067]; Abbildungen 9B, 9C, 14, 15A, 15B * | 9,14,15 | |
| | ----- | | |
| Y | BRINKER TOBIAS ET AL: "Comparison of Modulation Techniques for a Single-Phase Full-Bridge Photovoltaic Micro-Inverter Considering Reactive Power Capability", 2021 IEEE ENERGY CONVERSION CONGRESS AND EXPOSITION (ECCE), IEEE, 10. Oktober 2021 (2021-10-10), Seiten 1-8, XP034020479, DOI: 10.1109/ECCE47101.2021.9595845 [gefunden am 2021-10-29] * Subsection III. B. Investigation in Terms of Power Semiconductor Losses; Abbildung 3 * | 9,14,15 | |
| | ----- | | |
| | -/-- | | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 17. Februar 2024 | Kanelis, Konstantin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 23 19 7474

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CUI BIN ET AL: "A Novel Analysis, Design, and Optimal Methodology of High-Frequency Oscillation for Dual Active Bridge Converters With WBG Switching Devices and Nanocrystalline Transformer Cores", IEEE TRANSACTIONS ON POWER ELECTRONICS, INSTITUTE OF ELECTRICAL AND ELECTRONICS ENGINEERS, USA, Bd. 36, Nr. 7, 5. Januar 2021 (2021-01-05), Seiten 7665-7678, XP011843417, ISSN: 0885-8993, DOI: 10.1109/TPEL.2021.3049140 [gefunden am 2021-03-04] * Equations 7, 34, 35; Subsection V. C. Reducing the dv/dt of the Converter; Subsection V. D. Proposed Elimination Method of HFO:; Abbildung 2; Tabellen 4,5 * ----- | 10-12 | |
| A | US 2022/077788 A1 (SINGH TARUNVIR [IN] ET AL) 10. März 2022 (2022-03-10) * Absatz [0041]; Abbildung 1 * ----- | 1-15 | RECHERCHIERTE SACHGEBIETE (IPC) |
| A | SAMANTA SUVENDU ET AL: "Small-Signal Modeling and Closed-Loop Control of a Parallel-Series/Series Resonant Converter for Wireless Inductive Power Transfer", IEEE TRANSACTIONS ON INDUSTRIAL ELECTRONICS, IEEE SERVICE CENTER, PISCATAWAY, NJ, USA, Bd. 66, Nr. 1, 1. Januar 2019 (2019-01-01), Seiten 172-182, XP011689519, ISSN: 0278-0046, DOI: 10.1109/TIE.2018.2823682 [gefunden am 2018-08-31] * Zusammenfassung; Abbildung 1 * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 17. Februar 2024 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2024

| Im Recherchenbericht angeführtes Patentdokument | Datum der Veröffentlichung | Mitglied(er) der Patentfamilie | Datum der Veröffentlichung |
|---|---|---|---|
| US 10819244 B1 | 27-10-2020 | CN 112117903 A<br>US 10819244 B1<br>US 2021111632 A1 | 22-12-2020<br>27-10-2020<br>15-04-2021 |
| EP 3972105 A1 | 23-03-2022 | CN 114268229 A<br>EP 3972105 A1<br>US 2022085725 A1 | 01-04-2022<br>23-03-2022<br>17-03-2022 |
| US 2022077788 A1 | 10-03-2022 | CN 116114158 A<br>DE 112021004636 T5<br>US 2022077788 A1<br>WO 2022051701 A1 | 12-05-2023<br>29-06-2023<br>10-03-2022<br>10-03-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018086806 A1
- DE 102004035248 A1
- EP 2795781 B1
- US 8363427 B2
- US 20210099096 A1
- US 9515562 B2
- US 11411502 B2
- US 20150263634 A1